# EUROPEAN PATENT APPLICATION

(11) **EP 3 868 210 A1**
(43) Date of publication of application: **25.08.2021**
(21) Application number: 18937268.3
(22) Date of filing: 19.10.2018
(51) Int. Cl.: A21D 8/02, C12G 1/02, C12N 1/18

(54) **AUTOMATIC MACHINE FOR REHYDRATING POWDERED YEAST**

(71) Applicant: Roal Pan Panificación, S.L., 28223 Pozuelo de Alarcón (Madrid) (ES); Martín Jácome, Rafael, 28939 Arroyomolinos (Madrid) (ES)
(72) Inventor: PALOMO SANTAMARINA, Tomás, 28224 Pozuelo de Alarcón (Madrid) (ES); MARTÍN JÁCOME, Rafael, 28939 Arroyomolinos (Madrid) (ES)
(74) Representative: Isern Patentes y Marcas S.L.
(86) International application number: PCT/ES2018/070684
(87) International publication number: WO 2020/079291

(57) **Abstract**

The invention relates to an automatic machine for rehydrating powdered yeast, which comprises a first frame or structure (1) made with a covering of steel or similar, and which includes wheels to improve transportation, and wherein the structure (1) acts as a housing for a steel hopper (2) for receiving industrial containers for distributing powdered yeast, and wherein adjacently to the hopper (2) is located a yeast-dispensing system (3) for dispensing yeast to a mixer tank (4) connected to a water inlet circuit (5), all of this being commanded by control logic means (6) that include a touchscreen (6a) for more comfortable handling, the control logic means (6) incorporating a computer program that commands all the operations of the machine.

## Description

### Object of the invention

The object of this specification is an automatic machine for rehydrating powdered yeast, applicable in various sectors, such as, for example, in bakeries, pastry kitchens, the wine industry and/or all sectors which use any of the different types of yeast for the creation thereof.

### Background of the invention

Yeasts are known to be living organisms, more specifically, microscopic single-cell plants, specifically known as fungi. Yeast normally refers to a product which is bought in the format of fresh or dry yeast.

More specifically, fresh yeast is made of millions of these yeasts pressed together, while dry yeast is made of yeasts which are dehydrated and grouped in the form of granules, which, as in the case of the seeds, are dormant, until they are rehydrated to certain conditions, for the correct use thereof.

In the food sector, they are particularly useful because they enable fermentation to occur (due to their production of ethanol and carbon dioxide) in various uses, such as, for example, in the preparation of bread, where these infinite cells come into operation, transforming the rest of the ingredients.

Among the most well-known and widespread yeasts, *Saccharomyces cerevisiae,* better known as "brewer's yeast", stands out. It is also a single-celled fungus which is used to produce a wide range of consumer products, such as: bread, wine and beer.

Currently, the use of fresh yeast is the most popular, but it has a number of disadvantages compared to dry yeast, such as, among others: the storage conditions (cold), expiry date and the price of transport thereof.

The problem associated with the use of this type of yeast is that the transformation of dry yeast into liquid yeast requires highly expensive installations, especially designed for industrial uses due to the magnitude and installation and operating costs thereof.

The applicant, in turn, is the holder of patent WO2015086861 which describes a machine for hydrating powdered yeast, comprising a frame which is closed peripherally by a casing and which houses a hopper feeding metered powdered yeast into a mixer tank comprising a mixing blade actuated by a motor, such that the resulting mixture is conveyed by a metering pump to a kneader in a production line, assisted by the machine, and is also characterised in that it comprises a volumetric metering device for the mixture, providing a controlled quantity of yeast through a discharge valve for the mixture; and wherein two water inlet valves, hot and cold, control the passage of water into the tank, maintaining a constant quantity of water therein, the temperature of said water being controlled using an automatic device for mixing and controlling the temperature of the water.

### Description of the invention

The technical problem solved by the present invention is to achieve simple and easy means for transforming dry yeast into tempered liquid yeast, thereby optimising the performance thereof. To do so, the machine for hydrating powdered yeast, object of the present specification, comprises a first frame or structure with a covering of steel or similar, and which includes wheels to improve transportation, and which is characterised in that the structure acts as a housing for a steel hopper for receiving industrial containers for distributing powdered yeast, and wherein adjacently to the hopper is located a yeast-dispensing system for dispensing yeast to a mixer tank connected to a water inlet circuit, all of this being commanded by control logic means that include a touchscreen for more comfortable handling, the control logic means incorporating a computer program that commands all the operations of the machine.

Thanks to the design thereof, the machine presented herein will simplify the current systems for transforming powdered yeast, minimising costs as much as possible and making the investment thereof profitable, increasing the profitability of the final product.

Likewise, by simply installing the machine presented herein, the user thereof will reduce the conventional industrial methods, which involve a cold mixing system by means of a stirrer in continuous movement at a controlled temperature, which implies a high energy cost (in addition to large installations to accommodate the process).

Therefore, by implementing the machine presented herein, it will in turn achieve reducing the conservation of the raw material (yeast) and bring systems of this type closer to smaller companies of the different sectors, which makes the use thereof more versatile and diversified in other technical sectors, wherein the installation of conventional systems is currently difficult to apply, such as, for example, in the field of bakeries, pastry shops, wineries and all those susceptible to using any of the different types of yeast for the creation thereof.

To achieve the proposed objectives, the invention had to be developed under strict control of the elements which form it, thus achieving the implementation of a compact, mobile and watertight machine which is compatible with the chemical process which it carries out, process of hydrating the powdered yeast, under optimal temperature conditions.

For the handling thereof, the machine will implement a series of mechanical elements governed by a control panel incorporating software which generates the necessary processes in an automated manner depending on the conditions of use thereof. This software will be highly important, since the modification of any of the parameters contained therein will vary the final product obtained, since they are directly related to the particular situation of the overall process of obtaining the product or products derived from the use of the yeast obtained.

The aforementioned software will control the process from yeast storage, passing through the dispensing thereof, and the amount of tempered water necessary for the method (added directly and untreated from a standard connection), and wherein the resulting mixture is sent directly to be used in the final mixing together with the flour and other ingredients.

Another aspect to take into account regarding the complexity of the design thereof is that the machine presented herein is designed to comply with all the regulatory standards of the different national offices where it can be sold, such that it is designed to be able to work in any temperature and/or humidity range.

Throughout the description and the claims, the word "comprise" and its variants are not intended to exclude other technical features, additions, components or steps. For those skilled in the art, other objects, advantages and features of the invention will be deduced from both the invention and the practical use of the invention. The following examples and drawings are provided by way of illustration and are not intended to restrict the present invention. Furthermore, the invention covers all the possible combinations of particular and preferred embodiments indicated herein.

### Brief description of the figures

What follows is a very brief description of a series of drawings that aid in better understanding the invention and which are expressly related to an embodiment of said invention that is presented by way of a non-limiting example of the same.

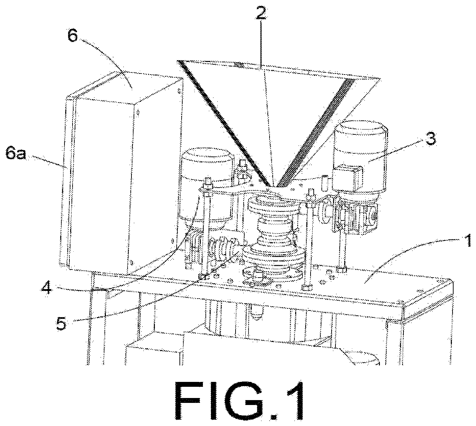

**FIG.** 1 shows a detail view of the automatic machine for rehydrating powdered yeast, object of the present invention.

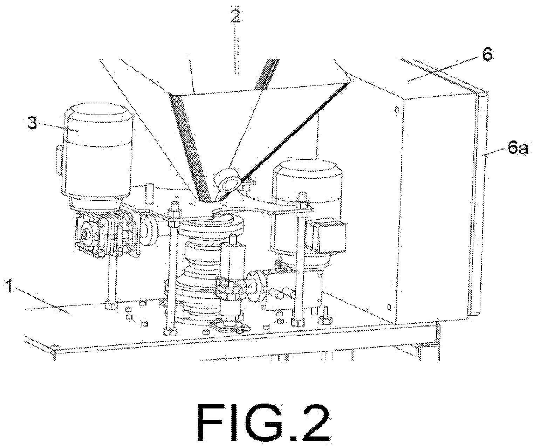

**FIG. 2** shows a second view of the automatic machine for rehydrating powdered yeast.

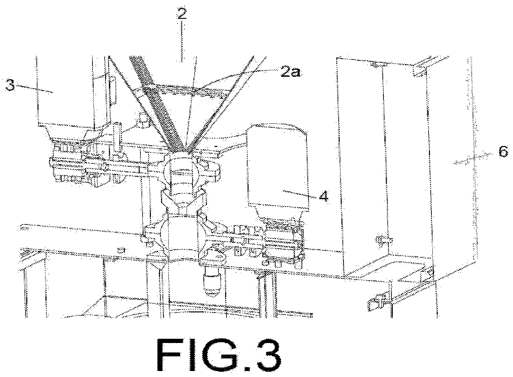

**FIG. 3** shows a cross-sectional view of the automatic machine for rehydrating powdered yeast, object of the present invention.

### Description of a detailed embodiment of the invention

The attached figures show a preferred embodiment of the invention. More specifically, the automatic machine for rehydrating powdered yeast, object of the present specification, is characterised in that it comprises a first chassis or structure (1) made with a covering of steel or similar, and which includes wheels to improve transportation; and wherein the structure (1) acts as a housing for a steel hopper (2) for receiving industrial containers for distributing powdered yeast, and wherein adjacently to the hopper (2) is located a yeast-dispensing system (3) for dispensing yeast to a mixer tank (4) connected to a water inlet circuit (5). All of this being commanded by control logic means (6) that include a touchscreen (6a) for more comfortable handling, and wherein the control logic means (6) will incorporate a computer program that commands all the operations of the machine by automating the process such that the intervention of the operator is minimal.

The hopper (2) in a preferred embodiment will internally include a sieve (2a) which will enable the yeast to be cleaned of possible impurities, lumps or similar, which could make the mixing thereof difficult or obstruct the feeding.

The yeast-dispensing system (3) will include a series of counters, which will control the number of doses requested by the computer program of the control logic means (6), and said system is completely insulated in order to prevent variation in volume due to the absorption of moisture, adapting it in turn to the different granulometries of the yeast suppliers, making it compatible with all of them. In a particular embodiment, said dosimetric control can be done manually.

The mixer tank (4) is connected to a water circuit (5), such that it is supplied with hot and cold water in the necessary doses and controlled by the control logic means (6), thanks to the interaction thereof with a series of volumetric counters which enable the necessary doses to be correctly set, such that the mixture of hot and cold water is the one specifically required for the type of mixture desired.

In a preferred embodiment, the mixer tank (4) will include a yeast-loading valve, an automatic decompression valve, an outlet for water pumped to the kneader and an electronic level control. All this, together with the fact that the blending time is programmable by the control means (6), and that the tank (4) is insulated from the rest of the elements in order to prevent accidental rehydration of the yeast, will cause the mixture obtained to comply with all the precise quality requirements.

Finally, the water inlet circuit (5) will be designed to send the complete mixture obtained by means of pumping to the kneader and, if desired, then the rest of the water from the kneading, already tempered, will be sent to clean in each cycle the assembly of the machine, preventing the presence of impurities or remains therein. This possibility of cleaning would be optional. The water inlet circuit (5) will be connected to a valve which cleans the tank in the cleaning phase thereof.

## Claims

1. An automatic machine for hydrating powdered yeast, which comprises a first frame or structure (1) made with a covering of steel or similar, and which includes wheels to improve transportation, and which is **characterised in that** the structure (1) acts as a housing for a steel hopper (2) for receiving industrial containers for distributing powdered yeast and wherein adjacently to the hopper (2) is located a yeast-dispensing system (3) for dispensing yeast to a mixer tank (4) connected to a water inlet circuit (5), all of this being commanded by control logic means (6) that include a touchscreen (6a) for more comfortable handling, the control logic means (6) incorporating a computer program that commands all the operations of the machine.

2. The machine according to claim 1, wherein the hopper (2) internally includes a sieve (2a) which enables the yeast to be cleaned of possible impurities, lumps or similar, which make the mixing or the dispensing thereof difficult.

3. The machine according to claim 1 or 2, wherein the yeast-dispensing system (3) includes a series of counters, which control the number of doses requested by the computer program of the control logic means (6).

4. The machine according to any one of claims 1 to 3, wherein the mixer tank (4) includes a yeast-loading valve, an automatic decompression valve, an outlet for water pumped to the kneader and an electronic level control.

5. The machine according to any one of claims 1 to 4, wherein the water inlet circuit (5) is connected to a valve which cleans the tank in the cleaning phase thereof.
